# EUROPÄISCHE PATENTSCHRIFT

(11) **EP 1 239 258 B1**
(45) Veröffentlichungstag und Bekanntmachung des Hinweises auf die Patenterteilung: **05.10.2005**
(21) Anmeldenummer: 02003410.4
(22) Anmeldetag: 14.02.2002
(51) Int. Cl.: G01B 5/00, G01C 9/28

(54) **Verfahren zum Einmessen eines Gegenstandes, insbesondere von Maschinen oder Anlagenteilen, in eine vorgegebene Lage**
Method of calibrating an objet, in particular machines or installation parts, in a predefined situation
Procédé pour étalonner un objet, en particulier des machines ou des pièces d'un équipement, dans une situation prédéfinie

(30) Priorität: 09.03.2001 DE 10111306
(43) Veröffentlichungstag der Anmeldung: 11.09.2002
(73) Patentinhaber: Coperion Werner & Pfleiderer GmbH, 70469 Stuttgart (DE)
(72) Erfinder: Davids, Ralf, Dipl.-Ing., 75428 Illingen (DE)
(74) Vertreter: Rau, Manfred

(56) Entgegenhaltungen:
- DE-A- 19 519 317
- DE-U- 29 703 026
- US-A- 4 003 133
- US-A- 5 575 073

## Beschreibung

Die Erfindung betrifft ein Verfahren zum Einmessen eines Gegenstandes, insbesondere von Maschinen oder Anlagenteilen, in eine vorgegebene Lage.

Ein bekanntes Verfahren ist in DE-U-297 03 226, US-A-5 575 073, DE-A-195 19 317 und US-A-4 003 133 offenbart.

Maschinen und Anlagen, insbesondere also Anlagenteile, müssen sehr häufig in ihrer endgültigen Betriebs-Stellung in exakt der gleichen Weise aufgestellt und ausgerichtet werden, wie dies zuvor bei der Werksmontage, also bei einer Probe-Aufstellung der Fall war. Ein derartiges Ausrichten erfolgt in der Praxis in der Regel mittels Wasserwaagen. Dazu werden an der Maschine oder sonstigen Gegenständen Auflageflächen bearbeitet und mit Wasserwaagen-Einstellwerten versehen. Alternativ werden auch Zylinder zur Auflage der Wasserwaage angebracht, die nach dem Ausrichten des Gegenstandes auf eine Null-Lage eingeschliffen werden. Diese bekannten Maßnahmen sind arbeits- und kostenintensiv.

Der Erfindung liegt daher die Aufgabe zugrunde, ein Verfahren der allgemeinen Gattung zu schaffen, das mit einfachen Mitteln und damit kostengünstig durchführbar ist.

Diese Aufgabe wird erfindungsgemäß durch die Merkmale des Anspruches 1 gelöst. Die durch zwei Schrauben-Köpfe mit definierten Flächen gebildete Bezugslinie beziehungsweise -fläche läßt sich bei der Probe-Aufstellung der Maschine exakt herstellen und erfassen und in gleicher Weise bei der endgültigen Betriebs-Stellung reproduzieren.

Weitere vorteilhafte und zum Teil erfinderische Ausgestaltungen ergeben sich aus den Unteransprüchen.

Weitere Merkmale, Vorteile und Einzelheiten der Erfindung ergeben sich aus der Beschreibung eines Ausführungsbeispieles anhand der Zeichnung. Es zeigt:
- Fig. 1: einen Längsschnitt durch einen Teil einer Maschine mit einer Basis-Schraube und einer Einstell-Schraube und aufgelegter Wasserwaage,
- Fig. 2: einen Querschnitt entsprechend der Schnittlinie II-II in Fig. 1 und
- Fig. 3: eine Teil-Draufsicht auf die Maschine mit der Basis-Schraube und zwei Einstell-Schrauben.

In der Zeichnung ist ein Bereich einer Maschine 1 dargestellt, der mindestens zwei Gewindelöcher 2, 3 aufweist. In das erste Gewindeloch 2 ist eine Basis-Schraube 4 eingeschraubt, und zwar so, daß ihr Kopf 5 gegen die Maschine 1, beispielsweise das Maschinenbett, anliegt. Zum Ausgleich gegen Unebenheiten des Maschinenbettes kann zwischen Kopf 5 und Maschine 1 eine Beilag-Scheibe 6 angeordnet sein. Die Basis-Schraube 4 ist gegenüber der Maschine 1 gegen Verdrehen gesichert, beispielsweise dadurch, daß sie in dem Gewindeloch 2 durch Klebstoff 14 fixiert ist. Es kann weiterhin anstelle der Verklebung eine nicht dargestellte Kontermutter vorgesehen sein oder die Schraube 4 selber als selbst-sichernde Schraube ausgebildet sein. Wesentlich ist, daß sie - mit bekannten Mitteln - gegen unbeabsichtigtes Verdrehen gegenüber der Maschine 1 gesichert ist, so daß ihr Kopf 5 eine unveränderbare definierte Lage gegenüber der Maschine 1 hat.

In das zweite Gewindeloch 3 ist eine mit der Basis-Schraube 4 identische Einstell-Schraube 7 geschraubt. Der Abstand der beiden Gewindelöcher 2, 3 ist kleiner als die Länge einer handelsüblichen Wasserwaage, also im Bereich von 20 bis 50 cm. Die handelsüblichen Schrauben 4, 7 weisen eine obere Kopf-Fläche 8 in Form einer Kugelkalotte auf.

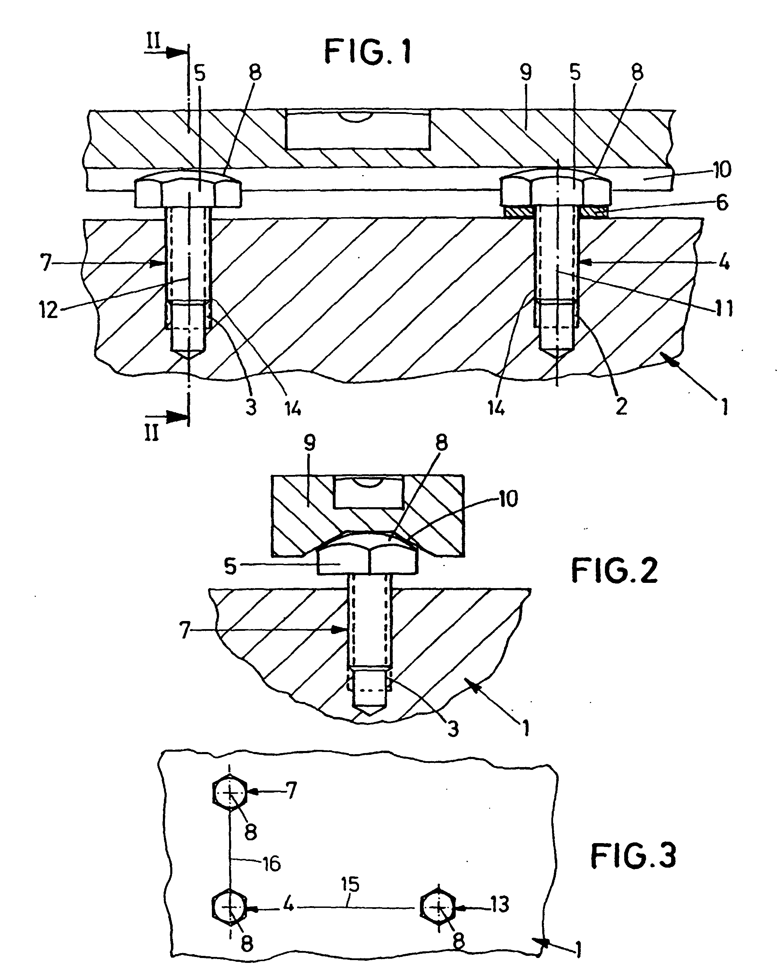

Wenn die Maschine 1 bei der Probe-Aufstellung und -Ausrichtung, beispielsweise beim Hersteller, ausgerichtet ist, dann wird die Einstell-Schraube 7 derart verdreht, daß die Kopf-Flächen 8 der beiden Schrauben 4, 7 sich gemeinsam exakt in der Horizontalen oder in der Vertikalen befinden. Dieses Einmessen erfolgt im dargestellten und beschriebenen Ausführungsbeispiel mittels einer Wasserwaage 9, die eine Anlagefläche 10 mit einem Prismenquerschnitt aufweist, wie insbesondere Fig. 2 entnehmbar ist. Bei der Probe-Aufstellung wird die Einstell-Schraube 7 solange im Gewindeloch 3 verstellt, bis die Wasserwaage 9 eine exakt horizontale oder vertikale Ausrichtung der beiden Kopf-Flächen 8 aufweist. Im dargestellten Ausführungsbeispiel verlaufen die Achsen 11, 12 der Gewindelöcher 2, 3 und damit der Schrauben 4, 7 parallel zueinander. Wenn die Einstell-Schraube 7 die exakte Einstellung aufweist, wird auch sie, beispielsweise durch Klebstoff 14, in ihrer Lage gesichert.

Wenn die Maschine 1 später an ihrem endgültigen Aufstellungsort aufgestellt wird, dann bilden die beiden Kopf-Flächen 8 der Schrauben 4, 7 eine erste exakte Referenzlinie beziehungsweise -fläche für die Ausrichtung der Maschine am Aufstellungsort in Richtung der Referenzlinie beziehungsweise -fläche.

Wenn - entsprechend Fig. 3 - eine dritte Schraube, bei der es sich um eine zweite Einstell-Schraube 13 handelt, etwa quer zur Verbindungslinie der Schrauben 4, 7 vorgesehen und beim Probe-Aufstellen und -Ausrichten in gleicher Weise wie die erste Einstell-Schraube 7 eingestellt wird, dann wird dadurch eine Referenzebene für das spätere endgültige Aufstellen und Ausrichten geschaffen. Die zweite Referenzlinie 16 wird hierbei durch die Basis-Schraube 4 und die zweite Einstell-Schraube 13 gebildet. Beide Referenzlinien 15 und 16 definieren die erwähnte Referenzfläche.

Damit an den die Bezugslinien beziehungsweise -flächen bildenden Kopf-Flächen 8 kein Verschleiß auftritt, kann es zweckmäßig sein, wenn die Köpfe 5 der Schrauben 4, 7, 13 gehärtet sind. Zusätzlich oder alternativ kann für den Transport der Maschine 1 von der Probe-Aufstellung zur endgültigen Aufstellung eine Schutzhaube über den Schrauben angeordnet sein, um Beschädigungen der kugelkalottenförmigen Kopf-Flächen 8 zu verhindern.

Im dargestellten Ausführungsbeispiel sind die Schrauben 4, 7, 13 im wesentlichen identisch ausgebildet und parallel zueinander in die Maschine 1 geschraubt; notwendig ist beides nicht. Die Schrauben müssen nur Kopf-Flächen 8 haben, die eine eindeutige Anlage der Wasserwaage 9 oder eines anderen geeigneten Meßgeräts zulassen. Desweiteren müssen die Schrauben 4, 7, 13 nicht parallel zueinander angeordnet sein; wesentlich ist nur, daß die Kopf-Flächen 8 noch an der Wasserwaage 8 bzw. dem sonstigen Meßinstrument anliegen. Schließlich müssen die jeweils durch die Kopf-Flächen 8 gebildeten Referenzlinien beziehungsweise -flächen nicht exakt horizontal oder vertikal verlaufen; dies ist nur die einfachste Ausrichtung, insbesondere bei der Anwendung einfacher Wasserwaagen. Wenn geeignete Meßgeräte eingesetzt werden, die die Reproduktion jedes beliebigen Winkels zulassen, dann können die Kopf-Flächen 8 auch in beliebigen Winkeln zueinander angeordnet sein. Weiterhin ist es möglich, mit zweimal zwei Schrauben zwei nicht parallele Referenzlinien zu definieren, mittels derer eine Ausrichtung in gleicher Weise möglich ist, wie mit den drei Schreiben 4, 7, 13.

## Patentansprüche

1. Verfahren zum Einmessen eines Gegenstandes, insbesondere von Maschinen oder Anlagenteilen, in eine vorgegebene Lage, mit folgenden Arbeitsschritten:
- Anbringen von mindestens zwei Gewindelöchern (2, 3) in dem Gegenstand (1),
- Einschrauben einer Basis-Schraube (4) mit Kopf-Fläche (8) in ein erstes Gewindeloch (2) und Sichern gegen unbeabsichtigtes Verdrehen,
- Einschrauben einer ersten Einstell-Schraube (7) mit einer zur Basis-Schraube (4) identischen Kopf-Fläche (8) in das zweite Gewindeloch (3),
- Ausrichten des Gegenstandes (1) in einer Probe-Aufstellung entsprechend seiner späteren Betriebs-Stellung,
- Verdrehen der ersten Einstell-Schraube (7) bis die Kopf-Flächen (8) der Basis-Schraube (4) und der Einstell-Schraube (7) sich in einer gemeinsamen Bezugslinie beziehungsweise -fläche (15, 16) in einer vorgegebenen Richtung befinden,
- Fixieren der ersten Einstell-Schraube (7) gegen unbeabsichtigtes Verdrehen,
- Verbringen des Gegenstandes (1) in seine Betriebs-Stellung, und
- Ausrichten des Gegenstandes (1) unter Einmessen der Bezugslinie beziehungsweise -fläche (15, 16), bis die Lage der Bezugslinie (15, 16) identisch mit der bei der Probe-Aufstellung ist.

2. Verfahren nach Anspruch 1, wobei die Bezugslinie beziehungsweise -fläche (15, 16) horizontal oder vertikal verläuft.

3. Verfahren nach Anspruch 1 oder 2, wobei Schrauben (4, 7) mit einer Kopf-Fläche (8) in Kugelkalottenform verwendet werden.

4. Verfahren nach einem der Ansprüche 1 bis 3, wobei die Bezugslinie beziehungsweise -fläche (15, 16) mittels einer Wasserwaage (9) gemessen wird.

5. Verfahren nach Anspruch 4, wobei eine Wasserwaage (9) mit einer Anlagefläche (10) mit Prismenform verwendet wird.

6. Verfahren nach einem der Ansprüche 1 bis 5, wobei Schrauben (4, 7) mit gehärteten Kopf-Flächen (8) verwendet werden.

7. Verfahren nach einem der Ansprüche 1 bis 6, wobei eine zweite Einstell-Schraube (13) eingesetzt wird, die quer zur Basis-Schraube (4) bezogen auf die Bezugslinie (16) angeordnet wird.

8. Verfahren nach einem der Ansprüche 1 bis 7, wobei die Schrauben (4, 7) mittels Klebstoff (14) gegen Verdrehen gesichert werden.

9. Verfahren nach einem der Ansprüche 1 bis 7, wobei die Schrauben (4, 7) mittels Kontermuttern gegen Verdrehen gesichert werden.

## Claims

1. A method of leveling out an object, in particular machines or parts of facilities, in a given position, comprising the following steps:
- fitting at least two threaded holes (2, 3) into the object (1);
- screwing a base screw (4) with a head surface (8) into a first threaded hole (2) and safeguarding against inadvertent rotation;
- screwing a first setting screw (7) with a head surface (8) identical with that of the base screw (4) into the second threaded hole (3);
- leveling out the object (1) in a test installation in accordance with its later position of operation;
- rotating the first setting screw (7) until the head surfaces (8) of the base screw (4) and of the setting screw (7) are on a common reference line or plane, respectively, (15, 16) in a given direction;
- fixing the first setting screw (7) against inadvertent rotation;
- moving the object (1) into its position of operation; and
- aligning the object (1) by leveling out the reference line or plane, respectively, (15, 16) until the position of the reference line or plane, respectively, (15, 16) is identical with the position during the test installation.

2. A method according to claim 1, wherein the reference line or plane, respectively, (15, 16) is horizontal or vertical.

3. A method according to claim 1 or 2, wherein screws (4, 7) with a domed head surface (8) are used.

4. A method according to one of claims 1 to 3, wherein the reference line or plane, respectively, (15, 16) is measured by a water level (9).

5. A method according to claim 4, wherein a water level (9) is used, having a bearing surface (10) in the shape of a prism.

6. A method according to one of claims 1 to 5, wherein screws (4, 7) with hardened head surfaces (8) are used.

7. A method according to one of claims 1 to 6, wherein a second setting screw (13) is employed which, related to the reference line or plane, respectively, (15, 16), is disposed crosswise of the base screw (4).

8. A method according to one of claims 1 to 7, wherein the screws (4, 7) are safeguarded against rotation by glue (14).

9. A method according to one of claims 1 to 7, wherein the screws (4, 7) are safeguarded against rotation by counternuts.

## Revendications

1. Procédé pour le calibrage d'un objet, en particulier de machines ou de parties d'installation, dans une position prédéfinie, comprenant les étapes de travail sur :
- placement d'au moins deux trous de filetage (2, 3) dans l'objet (1),
- vissage d'une vis de base (4) avec surface de tête (8) dans un premier trou de filetage (2) et blocage par rapport à une torsion involontaire,
- vissage d'une première vis de réglage (7) avec une surface de tête (8) identique à la vis de base (4), dans le second trou de filetage (3),
- orientation de l'objet (1) dans une installation d'échantillon conformément à une position de service ultérieure,
- rotation de la première vis de réglage (7) jusqu'à ce que les surfaces de tête (8) de la vis de base (4) et de la vis de réglage (7) se trouvent dans une ligne de référence ou une surface de référence (15, 16) commune dans une direction prédéfinie,
- fixation de la première vis de réglage (7) contre une torsion involontaire,
- placement de l'objet (1) dans sa position de service, et
- orientation de l'objet (1) avec calibrage de la ligne de référence et de la surface de référence (15, 16), jusqu'à ce que l'emplacement de la ligne de référence (15, 16) soit identique à celui lors de l'installation d'échantillon.

2. Procédé selon la revendication 1, la ligne de référence ou la surface de référence (15, 16) étant agencée horizontalement ou verticalement.

3. Procédé selon la revendication 1 ou 2, des vis (4, 7) avec une surface de tête (8) en forme de calotte sphérique étant utilisées.

4. Procédé selon l'une quelconque des revendications 1 à 3, la ligne de référence ou la surface de référence (15, 16) étant mesurée au moyen d'un niveau à bulle d'air (9).

5. Procédé selon la revendication 4, un niveau à bulle d'air (9) avec une surface d'appui (10) avec une forme de prisme étant utilisé.

6. Procédé selon l'une quelconque des revendications 1 à 5, des vis (4, 7) avec des surfaces de tête (8) trempées étant utilisées.

7. Procédé selon l'une quelconque des revendications 1 à 6, une seconde vis de réglage (13) étant utilisée, laquelle est disposée transversalement à la vis de base (4) par rapport à la ligne de référence (16).

8. Procédé selon l'une quelconque des revendications 1 à 7, les vis (4, 7) étant bloquées contre la torsion au moyen de colle (14).

9. Procédé selon l'une quelconque des revendications 1 à 7, les vis (4, 7) étant bloquées contre la torsion au moyen de contre-écrous.
